# EUROPEAN PATENT APPLICATION

(11) **EP 4 455 750 A1**
(43) Date of publication of application: **30.10.2024**
(21) Application number: 22911185.1
(22) Date of filing: 19.12.2022
(51) Int. Cl.: G02B 6/44

(54) **OPTICAL FIBER CABLE**

(30) Priority: 20.12.2021 JP 2021206242
(71) Applicant: SUMITOMO ELECTRIC INDUSTRIES, LTD., Osaka-shi, Osaka 541-0041 (JP)
(72) Inventor: KIMURA, Toyoaki, Osaka-shi, Osaka 541-0041 (JP); SATO, Fumiaki, Osaka-shi, Osaka 541-0041 (JP); SUZUKI, Yohei, Osaka-shi, Osaka 541-0041 (JP); TSUCHIYA, Kenta, Osaka-shi, Osaka 541-0041 (JP)
(74) Representative: Müller-Boré & Partner Patentanwälte PartG mbB
(86) International application number: PCT/JP2022/046686
(87) International publication number: WO 2023/120483

(57) **Abstract**

The present disclosure relates to an optical fiber cable that includes a plurality of optical fibers; a cable sheath covering the plurality of optical fibers; and a plurality of tension member groups embedded in the cable sheath, in which each of the plurality of tension member groups includes a plurality of tension members, the plurality of tension members are not in contact with each other, the plurality of tension member groups are arranged along a circumferential direction of the cable sheath in a cross section perpendicular to an axial direction of the optical fiber cable, and adjacent tension member groups among the plurality of tension member groups are separated from each other.

## Description

### TECHNICAL FIELD

The present disclosure relates to an optical fiber cable. The present application claims priority based on a Japanese Application No. 2021-206242 filed on December 20, 2021, contents of which are incorporated by reference in its entirety.

### BACKGROUND ART

Patent Literature 1 discloses an optical fiber cable that is installed in a duct by airblowing.

### CITATION LIST

### PATENT LITERATURE

Patent Literature 1: JP2020-204752A

### SUMMARY OF INVENTION

An optical fiber cable according to an aspect of the present disclosure includes:
a plurality of optical fibers;
a cable sheath covering the plurality of optical fibers; and
a plurality of tension member groups embedded in the cable sheath, in which
each of the plurality of tension member groups includes a plurality of tension members,
the plurality of tension members are not in contact with each other,
the plurality of tension member groups are arranged along a circumferential direction of the cable sheath in a cross section perpendicular to an axial direction of the optical fiber cable, and
adjacent tension member groups among the plurality of tension member groups are separated from each other.

### BRIEF DESCRIPTION OF DRAWINGS

[Fig. 1] Fig. 1 is a view showing an optical fiber cable according to an embodiment of the present disclosure.
[Fig. 2] Fig. 2 is a cross-sectional view showing an example of an optical fiber cable according to Comparative Example 1.
[Fig. 3] Fig. 3 is a cross-sectional view showing an example of an optical fiber cable according to Comparative Example 2.

### DESCRIPTION OF EMBODIMENTS

### [Technical Problem]

In many cases, an air-blown optical fiber cable uses a hard cable sheath by thinning a cable sheath thickness in order to reduce a diameter and a weight. In such a case, only a thin tension member can be embedded in the cable sheath, and thus it is difficult to suppress a reduction in rigidity of the optical fiber cable and linear expansion of the cable sheath. Further, even if a plurality of tension members are embedded in the cable sheath, extensibility and flexibility of the optical fiber cable may change depending on an arrangement of the tension members.

An object of the present disclosure is to provide an optical fiber cable that has sufficient extensibility and flexibility and can suitably prevent expansion and contraction of a cable sheath due to temperature change.

### [Advantageous Effects of Invention]

According to the present disclosure, it is possible to provide an optical fiber cable that has sufficient extensibility and flexibility and that can suitably prevent expansion and contraction of a cable sheath due to temperature change.

### [Description of Embodiment of Present Disclosure]

A summary of the embodiment will be described.
(1) An optical fiber cable includes:
   a plurality of optical fibers;
   a cable sheath covering the plurality of optical fibers; and
   a plurality of tension member groups embedded in the cable sheath, in which
   each of the plurality of tension member groups includes a plurality of tension members,
   the plurality of tension members are not in contact with each other,
   the plurality of tension member groups are arranged along a circumferential direction of the cable sheath in a cross section perpendicular to an axial direction of the optical fiber cable, and
   adjacent tension member groups among the plurality of tension member groups are separated from each other.

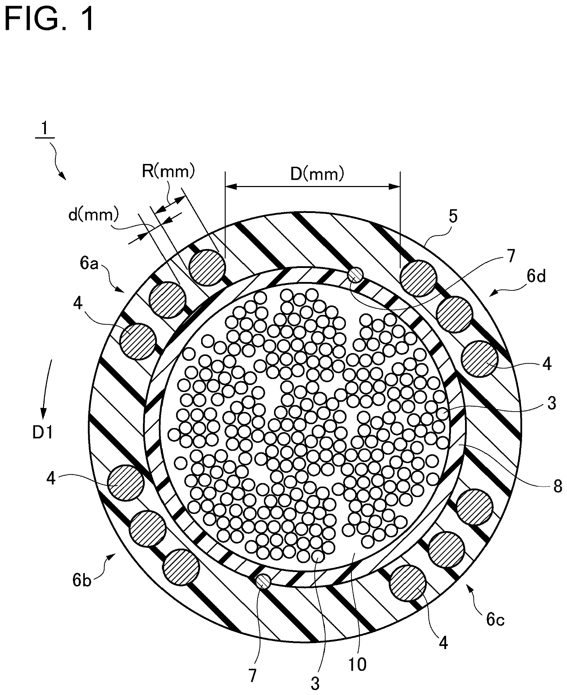

   According to the above configuration, since the plurality of tension member groups are disposed in the cable sheath, extensibility of the optical fiber cable can be sufficiently secured. Further, since the adjacent tension member groups are separated from each other, the bendability (flexibility) of the optical fiber cable can be improved. "Adjacent tension member groups are separated from each other" means that, when the tension member groups are regarded as one group, there is a gap between the adjacent tension member groups, and specifically, means that D > d in Fig. 1. Further, when the tension members are in contact with each other, since close contact areas between the cable sheath and the tension members are reduced, an effect of suppressing expansion and contraction of the cable sheath may be reduced. In the above configuration, since the tension members are not in contact with each other, a reduction in adhesion between each tension member and the cable sheath is prevented. Therefore, it is possible to suitably prevent the expansion and contraction of the cable sheath due to the temperature change by each tension member. Accordingly, it is possible to provide the optical fiber cable that has the sufficient extensibility and flexibility and that can suitably prevent the expansion and contraction of the cable sheath due to the temperature change.
(2) The optical fiber cable according to Item (1), in which a shortest distance between adjacent tension members among the plurality of tension members provided in each of the plurality of tension member groups is 0.05 mm or more.
   According to the above configuration, since the shortest distance between the adjacent tension members is 0.05 mm or more, the adhesion between each tension member and the cable sheath is sufficiently secured, and the expansion and contraction of the cable sheath due to the temperature change can be suitably prevented by each tension member.
(3) The optical fiber cable according to Item (1) or Item (2), in which when an outer diameter of the tension member is R, a shortest distance D between the adjacent tension member groups satisfies a condition of D > 3R.
   According to the above configuration, it is possible to improve the flexibility of the optical fiber cable while sufficiently securing the extensibility of the optical fiber cable.
(4) The optical fiber cable according to any one of Items (1) to (3), in which the plurality of tension member groups are arranged at equal intervals along the circumferential direction of the cable sheath.
   According to the above configuration, a situation in which the optical fiber cable is bent in a specific direction can be suitably prevented, and the optical fiber cable can be suitably air-blown into a duct such as a micro duct.
(5) The optical fiber cable according to any one of Items (1) to (4), in which each of the plurality of tension member groups includes three or more tension members.

According to the above configuration, the extensibility of the optical fiber cable can be improved.

### [Details of Embodiment]

Hereinafter, an optical fiber cable 1 according to an embodiment of the present disclosure (hereinafter, referred to as the present embodiment) will be described with reference to Fig. 1. Dimensions of members shown in each drawing may be different from actual dimensions of members for convenience of description.

Fig. 1 is a view showing an optical fiber cable 1 according to an embodiment of the present embodiment. The cross section of the optical fiber cable 1 shown in Fig. 1 is perpendicular to an axial direction of the optical fiber cable 1. As shown in Fig. 1, the optical fiber cable 1 includes a plurality of optical fibers 3, a water-absorbing tape 8, rip cords 7, a cable sheath 5, and a plurality of tension member groups 6a to 6d. An outer diameter of the optical fiber cable 1 is, for example, in a range of 5 mm to 20 mm.

The optical fiber cable 1 is, for example, an air-blown optical fiber cable that is air-blown into a duct such as a microduct. The plurality of optical fibers 3 are accommodated in an accommodation space 10 of the optical fiber cable 1. The plurality of optical fibers 3 extend along the axial direction of the optical fiber cable 1. The plurality of optical fibers 3 may be spirally twisted along the axial direction. The optical fiber 3 includes a glass fiber and a resin coating covering the glass fiber. The glass fiber includes at least one core through which signal light propagates and a cladding that covers the core. The refractive index of the core is larger than the refractive index of the cladding.

In this embodiment, the plurality of individual optical fibers 3 are accommodated in the accommodation space 10, but a plurality of optical fiber ribbons each including a plurality of optical fibers 3 may be accommodated in the accommodation space 10. In this case, the optical fiber ribbon may be, for example, an intermittent adhesion type optical fiber ribbon in which adjacent optical fibers among a plurality of optical fibers arranged in parallel are intermittently adhered along the axial direction. Further, the plurality of optical fiber ribbons may be spirally twisted along the axial direction of the optical fiber cable 1.

The water-absorbing tape 8 is wound around the entire plurality of optical fibers 3, for example, longitudinally or laterally. The water-absorbing tape 8 is subjected to water absorption processing by attaching water-absorbing powder to a basic cloth made of, for example, polyester. The rip cord 7 is for ripping the cable sheath 5 and is embedded in the cable sheath 5. In this embodiment, two rip cords 7 are provided in the optical fiber cable 1. By pulling out the rip cords 7, the cable sheath 5 can be torn in the axial direction (longitudinal direction), and as a result, the optical fibers 3 can be taken out. The rip cord 7 is formed of, for example, a plastic material (for example, polyester) that has high tension.

The cable sheath 5 is provided so as to cover the periphery of the plurality of optical fibers 3. The cable sheath 5 is formed of a resin such as polyvinyl chloride (PVC) or polyethylene (PE). The resin of the cable sheath 5 preferably has a Young's modulus of 500 MPa or more. The cable sheath 5 preferably contains a silicon-based lubricant. The silicon-based lubricant is contained at a ratio of, for example, 2 wt% or more, preferably 3 wt% or more and 5 wt% or less.

The cable sheath 5 is preferably formed of a resin having high flame retardance. The cable sheath 5 is formed of, for example, flame-retardant PVC or flame-retardant polyethylene having an oxygen index of 50 or more. Accordingly, the optical fiber cable 1 conforms to the UL 1666 riser grade in the National Electrical Code (NEC) standard of North America and the Cca class in the Construction Products Regulation (CPR) standard of Europe. The cable sheath 5 is, for example, a thermoplastic resin, and is formed by extrusion-molding the resin on the plurality of optical fibers 3 around which the water-absorbing tape 8 is wound.

The four tension member groups 6a to 6d are embedded in the cable sheath 5. The tension member groups 6a to 6d are arranged along a circumferential direction D1 of the cable sheath 5 in the cross section of the optical fiber cable 1 in Fig. 1. In particular, the tension member groups 6a to 6d may be arranged at equal intervals along the circumferential direction D1. Each of the tension member groups 6a to 6d includes three tension members 4. In the following description, the tension member groups 6a to 6d may be collectively referred to simply as a tension member group 6.

The tension member 4 is formed of an tensile material. Specifically, the tension member 4 may be formed of a fiber-reinforced plastic (FRP) such as an aramid FRP, a glass FRP, or a carbon FRP. The cross-section of each tension member 4 is circular. An outer diameter R of each tension member 4 is, for example, within a range of 0.2 mm to 2 mm. Each tension member 4 extends along the axial direction of the optical fiber cable 1. The tension members 4 provided in the tension member groups 6a to 6d are not in contact with each other. In this respect, a shortest distance d between the adjacent tension members 4 is 0.05 mm or more.

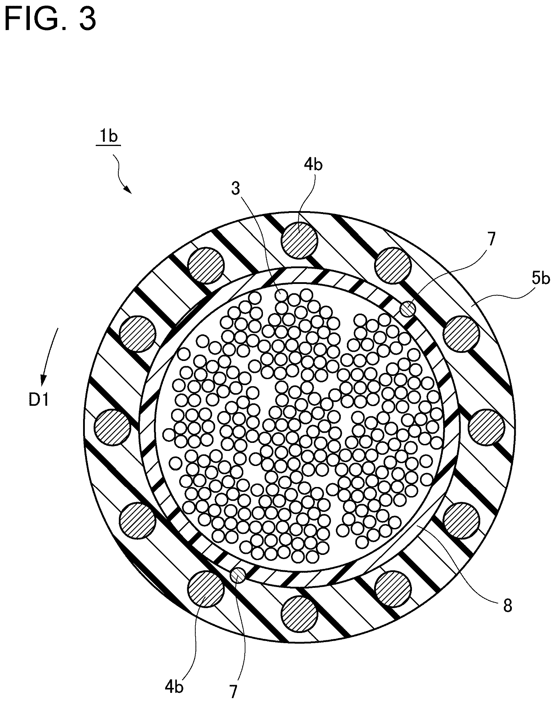

In the present embodiment, the shortest distance d between the adjacent tension members 4 is different from the shortest distance D between the adjacent tension member groups 6. More specifically, the shortest distance d between the adjacent tension members 4 is smaller than the shortest distance D between the adjacent tension member groups 6. As described above, in the tension member group defined in the present embodiment, the shortest distance between the adjacent tension members among the plurality of tension members provided in the tension member group is smaller than the shortest distance between the adjacent tension member groups. That is, it should be noted that a group including several of the plurality of tension members 4 arranged at equal intervals along the circumferential direction D1 as shown in Fig. 3 does not correspond to the tension member group defined in the present embodiment.

Further, adj acent tension member groups among the tension member groups 6a to 6d are separated from each other. As shown in Fig. 1, the shortest distance D between the adjacent tension member groups 6a and 6d satisfies a condition of D > 3R (as described above, R indicates the outer diameter of the tension member 4). In this example, since the tension member groups 6a to 6d are arranged at the same interval along the circumferential direction D1, a shortest distance between the adjacent tension member groups 6a and 6b, a shortest distance between the adjacent tension member groups 6b and 6c, and a shortest distance between the adjacent tension member groups 6c and 6d are also D. The tension member groups 6a to 6d are not necessarily arranged at the same intervals along the circumferential direction D1. When the tension member groups 6a to 6d are arranged at different intervals along the circumferential direction D1, the shortest distance D between any two adjacent tension member groups 6 among the four tension member groups 6a to 6d satisfies the condition of D > 3R.

According to the optical fiber cable 1 of the present embodiment, since the four tension member groups 6a to 6d are disposed in the cable sheath 5, it is possible to sufficiently secure extensibility of the optical fiber cable 1. Further, since the adjacent tension member groups 6 are separated from each other, the bendability (flexibility) of the optical fiber cable 1 can be improved. In particular, since the shortest distance D between the adjacent tension member groups 6 satisfies the condition of D > 3R, it is possible to improve the flexibility of the optical fiber cable 1 while sufficiently securing the extensibility of the optical fiber cable 1.

Further, when the tension members 4 provided in each tension member group 6 are in contact with each other, since close contact areas between the cable sheath 5 and the tension members 4 decrease, an effect of suppressing expansion and contraction of the cable sheath 5 may be reduced. On the other hand, in the present embodiment, since the tension members 4 are not in contact with each other, a reduction in adhesion between each tension member 4 and the cable sheath 5 is prevented. In particular, since the shortest distance d between the adj acent tension members 4 is 0.05 mm or more, the adhesion between each tension member 4 and the cable sheath 5 is sufficiently ensured. Therefore, the expansion and contraction of the cable sheath 5 due to a temperature change can be suitably prevented by each tension member 4. Accordingly, it is possible to provide the optical fiber cable 1 that has sufficient extensibility and flexibility and that can suitably prevent the expansion and contraction of the cable sheath 5 due to the temperature change. In particular, since the optical fiber cable 1 according to the present embodiment has the sufficient extensibility and flexibility, the optical fiber cable 1 is suitable for an air-blown optical fiber cable.

As shown in Table 1 below, when the shortest distance d between the adjacent tension members 4 is 0.05 mm or more, it is confirmed that an adhesion force between the tension members 4 and the cable sheath 5 is 9.8 N/cm or more. When the adhesion force between the tension members 4 and the cable sheath 5 is 9.8 N/cm or more, the expansion and contraction of the cable sheath 5 can be suitably prevented, and an increase in transmission loss of the optical fiber cable 1 in a low-temperature environment can also be prevented.

**[Table1]**

| Table 1: Relationship between Shortest Distance between Adjacent Tension Members and Adhesion Force between Tension members and Cable Sheath | | |
|---|---|---|
| Shortest distance between adjacent tension members d (mm) | Minimum adhesion force (N/cm) | Maximum adhesion force (N/cm) |
| 0.02 | 0.0 | 9.8 |
| 0.04 | 7.8 | 19.6 |
| 0.05 | 9.8 | 44.1 |
| 0.06 | 17.6 | 63.7 |
| 0.08 | 24.5 | 97.0 |
| 0.10 | 31.4 | 148.9 |
| 0.15 | 34.3 | 164.6 |
| 0.20 | 40.2 | 205.8 |
| 0.25 | 66.6 | 225.4 |

Further, according to the present embodiment, since the tension member groups 6a to 6d are arranged at equal intervals along the circumferential direction D1, it is possible to suitably prevent a situation in which the optical fiber cable 1 is bent in a specific direction, and it is possible to suitably air-blow the optical fiber cable 1 into the duct.

In the present embodiment, the four tension member groups 6a to 6b are embedded in the cable sheath 5, but the number of the tension member groups is not particularly limited. Similarly, each tension member group 6 includes three tension members 4, but the number of tension members 4 provided in each tension member group 6 is not particularly limited. In this respect, when three or more tension members 4 are provided in each tension member group 6, the extensibility of the optical fiber cable 1 is further improved.

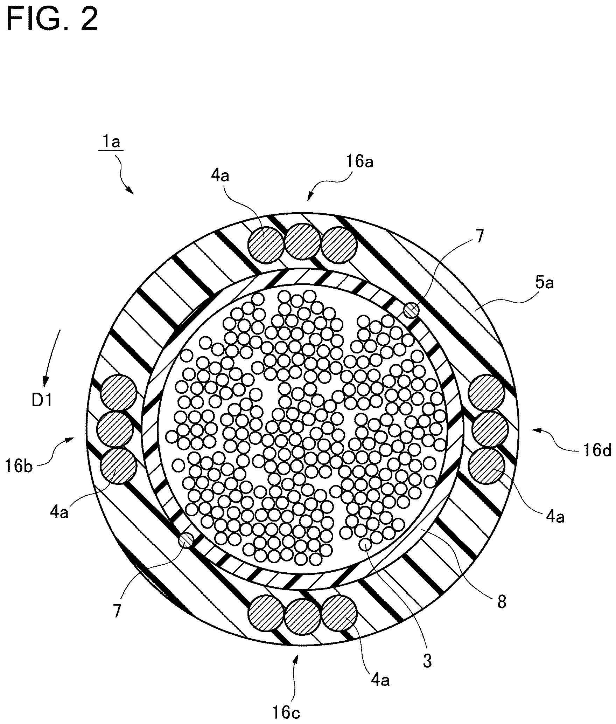

Next, an optical fiber cable 1a in Comparative Example 1 and an optical fiber cable 1b in Comparative Example 2 will be briefly described with reference to Figs. 2 and 3. As shown in Fig. 2, in the optical fiber cable 1a according to Comparative Example 1, four tension member groups 16a to 16d are arranged at equal intervals along the circumferential direction D1 of a cable sheath 5a, and tension members 4a provided in each of the tension member groups 16a to 16d are in contact with each other. On the other hand, as shown in Fig. 3, in the optical fiber cable 1b in Comparative Example 2, tension members 4b are not disposed in a cable sheath 5b in a state of forming a group. That is, twelve tension members 4b are arranged at equal intervals along the circumferential direction D1 of the cable sheath 5b.

In the optical fiber cable 1a shown in Fig. 2, since each tension member 4a provided in each of the tension member groups 16a to 16d is in contact with the other tension member 4a, close contact areas between the cable sheath 5a and the tension members 4a are reduced, and the adhesion between each of the tension members 4 and the cable sheath 5 is weakened. Therefore, the effect of suppressing expansion and contraction of the cable sheath 5a is reduced.

On the other hand, in the optical fiber cable 1b shown in Fig. 3, since the twelve tension members 4b are embedded in the cable sheath 5b at equal intervals along the circumferential direction D1, flexibility of the optical fiber cable 1b may be reduced. In this respect, a rigidity value of each of the optical fiber cables 1, 1a, and 1b was actually measured under a condition that an outer diameter of each of the optical fiber cables 1, 1a, and 1b was 13 mm and the number of the optical fibers 3 accommodated in the optical fiber cable was 800. The method for measuring the rigidity value conforms to IEC 60794 Stiffness (Method E17A).

In measurement results, the rigidity value of the optical fiber cable 1 was 2.3 N·m², and the rigidity value of the optical fiber cable 1a was 2.2 N·m². On the other hand, the rigidity value of the optical fiber cable 1b was 3.1 N·m². Thus, it is understood that the optical fiber cable 1b shown in Fig. 3 has a considerably higher rigidity value than the optical fiber cable 1 shown in Fig. 1, and the flexibility of the optical fiber cable 1b is reduced. In the case where the rigidity value of the optical fiber cable is high, a storage property of the optical fiber cable is lowered, and thus it becomes difficult to handle the optical fiber cable. On the other hand, since the rigidity value of the optical fiber cable 1 is 2.3 N·m², it is understood that the optical fiber cable 1 has both sufficient extensibility and flexibility. In particular, it is understood that since the distance between the adjacent tension member groups 6 is sufficiently large (specifically, since the shortest distance D between the adjacent tension member groups 6 satisfies the condition of D > 3R), the rigidity value of the optical fiber cable 1 is lower than the rigidity value of the optical fiber cable 1b.

Although the present embodiment has been described above, it goes without saying that the technical scope of the present invention should not be interpreted limitedly by the descriptions of the embodiment. The present embodiment is merely an example, and it is understood by those skilled in the art that various modifications of the embodiment are possible within the scope of the invention described in the claims. Thus, the technical scope of the present invention should be determined based on the scope of the invention described in claims and the equivalent scope thereof.

### REFERENCE SIGNS LIST

1, 1a, 1b: optical fiber cable
3: optical fiber
4, 4a, 4b: tension member
5, 5a, 5b: cable sheath
6a, 6b, 6c, 6d: tension member group
7: rip cord
8: water-absorbing tape
10: accommodation space
16a, 16b, 16c, 16d: tension member group
R: outer diameter of tension member
d: shortest distance between adjacent tension members
D: shortest distance between adjacent tension member groups
D1: circumferential direction of cable sheath

## Claims

1. An optical fiber cable comprising:
a plurality of optical fibers;
a cable sheath covering the plurality of optical fibers; and
a plurality of tension member groups embedded in the cable sheath,
wherein each of the plurality of tension member groups includes a plurality of tension members,
wherein the plurality of tension members are not in contact with each other,
wherein the plurality of tension member groups are arranged along a circumferential direction of the cable sheath in a cross section perpendicular to an axial direction of the optical fiber cable, and
wherein adjacent tension member groups among the plurality of tension member groups are separated from each other.

2. The optical fiber cable according to claim 1,
wherein a shortest distance between adjacent tension members among the plurality of tension members provided in each of the plurality of tension member groups is 0.05 mm or more.

3. The optical fiber cable according to claim 1 or 2,
wherein when an outer diameter of the tension member is R, a shortest distance D between the adjacent tension member groups satisfies a condition of D > 3R.

4. The optical fiber cable according to any one of claims 1 to 3,
wherein the plurality of tension member groups are arranged at equal intervals along the circumferential direction of the cable sheath.

5. The optical fiber cable according to any one of claims 1 to 4,
wherein each of the plurality of tension member groups includes three or more tension members.
